# EUROPÄISCHE PATENTSCHRIFT

(11) **EP 3 024 629 B1**
(45) Veröffentlichungstag und Bekanntmachung des Hinweises auf die Patenterteilung: **14.11.2018**
(21) Anmeldenummer: 14726983.1
(22) Anmeldetag: 28.05.2014
(51) Int. Cl.: B29C 47/86, B29C 47/20, B29C 47/00, B29C 47/04

(54) **EXTRUSIONSWERKZEUG MIT EINER HEIZUNG DES AUSTRITTSBEREICHS, VERFAHREN ZUR ERZEUGUNG EINER KUNSTSTOFFSCHLAUCHFOLIE**
EXTRUSION DIE HAVING A HEATING OF THE DIE LIPS ZONE, PROCESS FOR THE MANUFACTURING OF AN EXTRUDED PLASTIC BLOWN FILM
TÊTE D'EXTRUSION AVEC UN CHAUFFAGE DE LA ZONE D'ÉCOULEMENT, PROCÉDÉ POUR LA PRODUCTION DE FILMS SOUFFLÉS PAR EXTRUSION

(30) Priorität: 22.07.2013 DE 102013107808; 31.10.2013 DE 102013112028
(43) Veröffentlichungstag der Anmeldung: 01.06.2016
(73) Patentinhaber: Windmöller & Hölscher KG, 49525 Lengerich (DE)
(72) Erfinder: RÜBBELKE, Ingo, 59590 Geseke (DE); GERSMANN, Mathias, 49078 Osnabrück (DE)
(86) Internationale Anmeldenummer: PCT/EP2014/061026
(87) Internationale Veröffentlichungsnummer: WO 2015/010812

(56) Entgegenhaltungen:
- EP-A1- 1 293 326
- EP-A1- 1 995 037
- EP-A1- 2 042 292
- WO-A1-96/31562
- CA-A1- 2 204 548
- FR-A1- 2 148 518
- JP-A- S5 991 037
- GANDER J D ET AL: "REVIEW OF DIE LIP BUILDUP IN PLASTICS EXTRUSION", POLYMER ENGINEERING AND SCIENCE, BROOKFIELD CENTER, US, vol. 37, no. 7, 1 July 1997 (1997-07-01), pages 1113-1126, XP000724850, ISSN: 0032-3888, DOI: 10.1002/PEN.11756

## Beschreibung

Die Erfindung betrifft ein Extrusionswerkzeug für einen Folienblaskopf einer Schlauchextrusionsanlage zur Extrusion eines Schlauches aus einer Kunststoffschmelze mit einem Werkzeugkörper, der einen Schmelzkanal zum Ausformen des Schlauches aufweist, wobei der Werkzeugkörper einen Mündungsbereich mit einer Austrittsöffnung für den Schlauch aufweist und derart ausgeführt ist, dass eine am Werkzeugkörper vorgesehene Heizung lediglich eine lokale Erwärmung des Mündungsbereiches bewirkt, wobei der Werkzeugkörper eine Wärmetrennung aufweist, die bewirkt, dass die von der Heizung ausgehende Wärme nahezu in den Mündungsbereich gelangt. Die Wärmetrennung erstreckt sich dabei schräg in Richtung des Schmelzkanals, wodurch der Wirkungsgrad der lokalen Erwärmung des Mündungsbereiches beeinflusst wird, wobei ein Abstand von 0,5 mm bis 10 mm zwischen der Wärmetrennung und dem Schmelzkanal verbleibt.

Des Weiteren bezieht sich die Erfindung auf ein Verfahren zur
Erzeugung eines Kunststoffschlauches, das aus einem solchen,
erfindungsgemäßen Extrusionswerkzeug extrudiert wird.

Aus der US 3709290 ist ein Extrusionswerkzeug für einen Folienblaskopf einer Schlauchextrusionsanlage bekannt. Es hat sich gezeigt, dass die Oberflächeneigenschaften des Extrudats im Allgemeinen zeigen, dass bei niedriger Scheerspannung das Austreten des Extrudats (Kunststoffschmelze) glatt und glänzend ist. Weist die genannte Spannung einen kritischen Wert auf, zeigt das Extrudat einen Verlust an Oberflächenglanz. Des Weiteren hat sich gezeigt, dass bei der Extrusion von Kunststofffolien, Blasfolien, die insbesondere mehrschichtig aufgebaut sein können, es bei bestimmen Rohstoffkombinationen des Extrudates durch strömungsbedingte Wechselwirkungen zwischen dem fließenden Polymer und der Schmelzkanalwandung am Mündungsbereich des Werkzeugkörpers häufig zu strukturellen Unregelmäßigkeiten an der Folienoberfläche, Schlauchoberfläche kommt. Diese entstehenden Oberflächenirregularitäten werden auch als Oberflächenschmelzbruch bezeichnet, der sich im Wesentlichen auf der Extrudatoberfläche beschränkt. Insbesondere die häufig in der Außen- und Innenschicht eingesetzten LLDPE oder mLLDPE Kunststoffe lassen sich oft nicht in einwandfreier Folienoptik extrudieren, ohne sogenannte Prozesshilfsmittel (z.B. AMF: Anti-Melt-Fracture) hinzu zu dosieren. Diese Prozesshilfsmittel dienen als Additive, um z.B. die Gleiteigenschaften der Kunststoffschmelze am Wandbereich des Schmelzkanals zu erhöhen, insbesondere die Reibung an der Schmelzkanalwand zu reduzieren. Diese Additive vermindern Schmelzbrüche in den Extrudaten. Nachteiligerweise sind derartige Additive teuer und die Zusatzkosten können, je nach gewünschter Konzentration, ihre Verwendung in Kunststoffen verbieten, wie z.B. LLDPE, welche z.B. für Gebrauchsartikel-Anwendungen vorgesehen sein können. Zudem können die genannten Additive bzw. Prozesshilfsmittel auch die rheologischen Eigenschaften des Kunststoffes der extrudierten Folie bzw. Schlauches beeinflussen. Zudem hat sich gezeigt, dass in Überschussmengen die eingesetzten Additive kritische Schlauch- bzw. Folieneigenschaften in der entgegengesetzten Richtung beeinflussen können, wie Glanz, Trübung, Transparenz und Verschweißbarkeit der Folie.

Die CA 2,204,548 A1 offenbart ein gattungsgemäßes Extrusionswerkzeug.

Die Aufgabe der vorliegenden Erfindung ist es, die oben genannten Nachteile zu verhindern, insbesondere ein Extrusionswerkzeug für einen Folienblaskopf einer Schlauchextrusionsanlage, ein Verfahren zur Erzeugung eines Kunststoffschlauches zu schaffen, wobei hohe Raten defektfreier Extrusionen der Kunststoffschmelze erzielbar sind, insbesondere Schmelzbrüche im Extrudat vermindert bzw. verhindert werden können.

Die Aufgabe der vorliegenden Erfindung wird durch sämtliche Merkmale des Patentanspruches 1 gelöst. In den abhängigen Patentansprüchen sind denkbare Ausführungsformen bezüglich des Extrusionswerkzeugs beschrieben. Des Weiteren wird die Erfindung durch sämtliche Merkmale des unabhängigen Patentanspruches 7 gelöst. In den abhängigen Verfahrensansprüchen sind mögliche Ausführungsformen des erfindungsgemäßen Verfahrens beschrieben.
Erfindungsgemäß wird ein Extrusionswerkzeug für einen Folienblaskopf einer Schlauchextrusionsanlage zur Extrusion eines Schlauches aus einer Kunststoffschmelze vorgeschlagen, wobei der Werkzeugkörper derart ausgeführt ist, dass eine am Werkzeugkörper vorgesehene Heizung lediglich eine lokale Erwärmung des Mündungsbereiches bewirkt. Es hat sich überraschenderweise gezeigt, dass mit einer lokal eingebrachten Temperaturerhöhung im Mündungsbereich des Werkzeugskörpers, der im Folgenden auch als Düse bezeichnet werden kann, der Effekt des Schmelzbruches am extrudierten Kunststoff bzw. an der extrudierten Folie oder am extrudierten Kunststoffschlauch abgestellt werden kann. Ein Kern der Erfindung ist hierbei, dass eine sehr definierte, örtliche Begrenzung bei der Erwärmung des Werkzeugkörpers stattfindet, und zwar lediglich im oder am Mündungsbereich des Werkzeugkörpers, an dem das Extrudat bzw. die Kunststoffschmelze austritt, da es andernfalls zu Materialverbrennungen im Extrusionswerkzeug kommen kann. Der Werkzeugkörper ist hierbei derart ausgebildet, dass lediglich eine lokale Erwärmung am Mündungsbereich erfolgt, ohne dass der restliche Werkzeugkörper wesentlich erwärmt wird. Es entsteht somit eine schmelzbruchvermeidende, lokale Temperaturerhöhungszone lediglich im oder am Mündungsbereich des Werkzeugkörpers, wodurch wirksam ein Schmelzbruch an der Oberfläche des Extrudats verhindert wird.

Erfindungsgemäß weist der Werkzeugkörper eine Wärmetrennung auf, die bewirkt, dass die von der Heizung ausgehende Wärme nahezu in den Mündungsbereich gelangt. Sie ist derart in den Werkzeugkörper integriert, dass ein Wärmeabfluss vom Mündungsbereich in den restlichen Werkzeugkörper gering gehalten wird. Zum Beispiel ist es denkbar, dass die Wärmetrennung am und/oder im Mündungsbereich angeordnet ist, die als Isolator ausgeführt ist. In einer möglichen Ausführungsform der Erfindung kann die Wärmetrennung als Luftspalt ausgeführt sein. Ebenfalls umfasst die Erfindung, dass die Wärmetrennung aus einem Werkstoffmaterial ausgeführt ist, das wärmeisolierende Eigenschaft aufweist, insbesondere das die Wärmetrennung aus einem keramischen Material ausgebildet ist.
Des Weiteren kann das erfindungsgemäße Extrusionswerkzeug einen Mündungsbereich des Werkzeugkörpers aufweisen, der vorsprungartig sich aus dem Werkzeugkörper erstreckt, wobei die Heizung am oder im Mündungsbereich angeordnet ist. Hier wird wirkungsvoll erzielt, dass der Mündungsbereich lediglich lokal erwärmt wird.
Eine die Erfindung verbessernde Maßnahme kann vorsehen, dass die Wärmetrennung eine Dicke aufweist, die zwischen 0,5 mm ≤ x ≤ 10 mm liegt, insbesondere die zwischen 1 mm ≤ x ≤ 5 mm liegt. Besonders bevorzugt liegt der Wert der Dicke der Wärmetrennung zwischen 2 mm und 3 mm. Hierbei kann die Wärmetrennung als Luftspalt ausgeführt sein oder aber auch aus einem definierten Werkstoffmaterial bestehen, der z.B. eine Keramik ist. Die oben genannte Dicke kann ausreichen, dass nahezu die von der Heizung eingebrachte Wärme im Mündungsbereich verbleibt, um einen Schmelzbruch im Extrudat zu verhindern.

Ferner umfasst das erfindungsgemäße Extrusionswerkzeug, dass die Wärmetrennung sich schräg in Richtung des Schmelzkanals erstreckt. Derartige Ausrichtungen der Wärmetrennung können den Wirkungsgrad der lokalen Erwärmung des Mündungsbereiches beeinflussen.

Erfindungsgemäß liegt der Abstand y zwischen der Wärmetrennung und dem Schmelzkanal zwischen 0,5 mm ≤ y ≤ 10 mm. Bevorzugt weist der Abstand zwischen der Wärmetrennung und dem Schmelzkanal einen Wert auf, der zwischen ungefähr 1 mm und 5 mm liegt. Hierdurch wird nicht im Wesentlichen der Werkzeugkörper geschwächt. Des Weiteren erfolgt eine zuverlässige Wärmetrennung, die wirkungsvoll einen Wärmeabfluss vom Mündungsbereich in den restlichen Werkzeugkörper verhindert bzw. gering hält.
In einer Ausführungsform weist das Extrusionswerkzeug einen Werkzeugkörper mit Heizung und der Wärmetrennung auf, die derart ausgeführt sind, dass die Schmelztemperatur des Schmelzkanals im Mündungsbereich größer ist als die Schmelztemperatur der Kunststoffschmelze. Vorteilhafterweise beträgt die Schmelztemperatur des Schmelzkanals, wenn die Heizung betrieben wird, 105% bis 150% T₀, wobei T₀ die Schmelztemperatur der Kunststoffschmelze ist. Es hat sich vorteilhafterweise gezeigt, dass bei derartigen Temperaturen bei der Schmelzkanalwand ein dünner Gleitfilm an der Kunststoffschmelze erzielt wird, wodurch eine Adhäsion der Kunststoffschmelze mit der Schmelzkanalwand verringert bzw. verhindert wird. Hierdurch lässt sich wirkungsvoll ein Schmelzbruch an der Oberfläche des Extrudats verhindern.

In einer die Erfindung verbessernden Maßnahme kann der Mündungsbereich sich umlaufend am Werkzeugkörper erstrecken, wobei der Mündungsbereich einen inneren Mündungsbereich und einen äußeren Mündungsbereich aufweist, wobei der innere Mündungsbereich und/oder der äußere Mündungsbereich die Heizung aufweisen. Der Mündungsbereich kann als Ring ausgebildet sein, der sich umlaufend am Werkzeugkörper erstreckt, so dass ein Schlauch als Extrudat aus dem Extrusionswerkzeug erzeugt werden kann.
Besonders vorteilhaft ist, dass der Werkzeugkörper derart ausgestaltet ist, dass der Mündungsbereich mit der Heizung am Werkzeugkörper nachrüstbar ist. Somit kann es sinnvoll sein, den Mündungsbereich montagefreundlich am Restkörper des Werkzeugkörpers separat als Ersatzteil anbringen zu können, wobei die Befestigungsart form- und/oder kraft- und/oder stoffschlüssig sein kann.
Des Weiteren wird die Erfindung durch ein Verfahren zur Erzeugung eines Kunststoffschlauches, der aus einem erfindungsgemäßen Extrusionswerkzeug eines Folienblaskopfes extrudiert wird, beschrieben, wobei das Extrusionswerkzeug einen Werkzeugkörper mit einem Schmelzkanal aufweist, aus dem aus einer Kunststoffschmelze der Kunststoffschlauch ausgeformt wird, der Werkzeugkörper einen Mündungsbereich mit einer Austrittsöffnung für den ausgeformten Kunststoffschlauch aufweist, und eine Heizung am Werkzeugkörper vorgesehen ist, die lediglich eine lokale Erwärmung des Mündungsbereiches bewirkt, wodurch ein dünner Gleitfilm der Kunststoffschmelze im Schmelzkanal entsteht, wobei der Gleitfilm sich entlang des Werkzeugkörpers des Mündungsbereiches erstreckt, so dass ein Schmelzbruch am Kunststoffschlauch verhindert wird. Besonders vorteilhaft ist, dass ein dünner Gleitfilm sich am Randbereich der Kunststoffschmelze bildet, der dem Schmelzkanal zugewandt ist. Es entsteht am Randbereich der Kunststoffschmelze ein dünner Gleitfilm, der vorteilhafterweise niedrigviskos ist und eine geringe Adhäsionswirkung mit der Schmelzkanalwand aufweist. Hierdurch entsteht eine Extrudatoberfläche, die kaum oder keine Oberflächenirregularitäten aufweist, die ansonsten zu Oberflächenschmelzbruch führen können.

Erfindungsgemäß kann vorgesehen sein, dass die Heizung Wärmeenergie in den Mündungsbereich einbringt, so dass ein niedrigviskoser Gleitfilm entsteht, insbesondere dass der Werkzeugkörper eine Wärmetrennung aufweist, die bewirkt, dass die von der Heizung ausgehende Wärme nahezu in den Mündungsbereich gelangt und/oder dass eine Wärmetrennung derart im Werkzeugkörper integriert ist, dass ein Wärmeabfluss vom Mündungsbereich in den restlichen Werkzeugkörper gering gehalten wird. Hierbei ist es vorteilhaft, dass die Viskosität des Gleitfilms wesentlich geringer ist als die Viskosität der übrigen Kunststoffschmelze innerhalb des Mündungsbereiches.

Das erfindungsgemäße Verfahren sowie das erfindungsgemäße Extrusionswerkzeug lässt sich besonders wirkungsvoll bei der Erzeugung eines Kunststoffschlauches anwenden, der eine extrudierte Kunststofffolie ist, die aus einem Polyethylen ausgeführt ist, insbesondere eine LLDPE-Folie oder mLLDPE-Folie ist. Gerade lineare Polyethylen Kunststoffe (LLDPE) haben aufgrund ihrer mechanischen Eigenschaften sowie den Strömungsinstabilitäten als Extrudats die Neigung zu einem Oberflächenschmelzbruch. Das vorgeschlagene Extrusionswerkzeug sowie das erfindungsgemäße, soeben genannte Verfahren können den Schmelzbruch bei den soeben genannten Kunststoffen wirkungsvoll verhindern.

Mit der erfindungsgemäßen Extrusionswerkzeug lässt sich eine extrudierte Kunststofffolie aus einem Polyethylen ausführen, insbesondere eine LLDPE-Folie oder mLLDPE-Folie, wobei die Folie zumindest aus einer Schicht ausgebildet ist, die Schicht aus 100 Gewichtsteilen ausgeführt ist, wobei die Schicht ein Schmelzbruch verhinderndes Prozesshilfsmittel mit einem Gewichtsanteil von 0 bis 2 aufweist. Vorteilhafterweise weist die extrudierte Kunststofffolie 0 Gewichtsanteile an Prozesshilfsmitteln auf, die einen Schmelzbruch verhindern können. Hierdurch lassen sich die Herstellkosten einer Kunststofffolie stark reduzieren. Zudem sind keine Prozesshilfsmittel (Additive) notwendig, die nach benötigter Konzentration auch die kritischen Folieneigenschaften in eine entgegengesetzte Richtung negativ beeinflussen können. In gewissen Anwendungsfällen kann es sogar verboten sein, Prozesshilfsmittel, insbesondere in einer definierten Konzentration einzusetzen.

Mit dem erfindungsgemäßen Extrusionswerkzeug lässt sich eine co-extrudierte Kunststofffolie herstellen, die aus mehreren Schichten ausgebildet ist, wobei zumindest eine der beiden äußeren Schichten wie folgt ausgeführt ist/sind:
die äußere Schicht ist aus 100 Gewichtsteilen ausgeführt, wobei die äußere Schicht ein Schmelzbruch verhinderndes Prozesshilfsmittel mit einem Gewichtsanteil von 0 bis 2 aufweist.

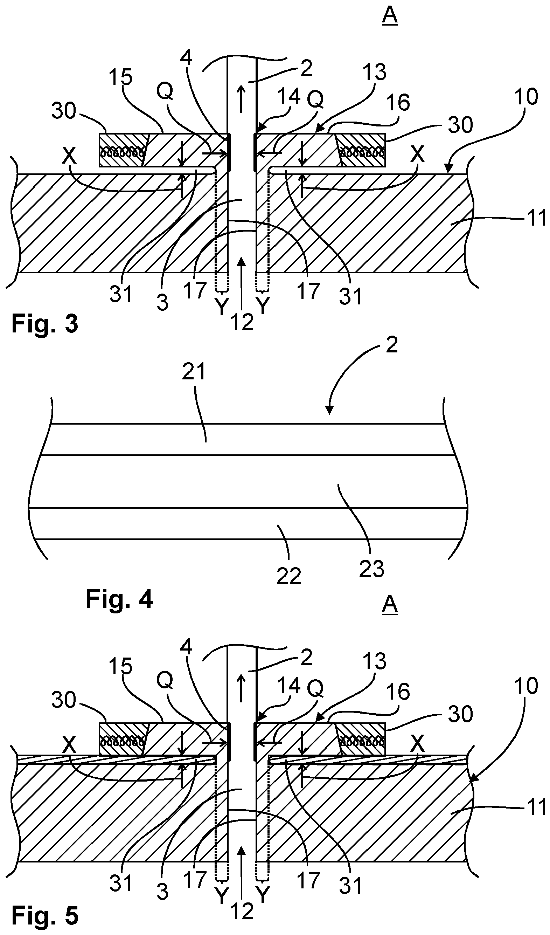

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Ansicht eines Blaskopfes einer Schlauchextrusionsanlage,
- Figur 2: eine schematische Ansicht eines Extrusionswerkzeuges für einen Folienblaskopf einer Schlauchextrusionsanlage,
- Figur 3: eine mögliche Ausführungsform des Mündungsbereiches des Extrusionswerkzeugs gemäß Figur 1 oder Figur 2,
- Figur 4: eine Schnittansicht durch den erzeugten, extrudierten Kunststoffschlauch gemäß Figur 1,
- Figur 5: eine weitere Ausführungsform des Mündungsbereiches des Extrusionswerkzeuges gemäß Figur 1 oder Figur 2,
- Figur 6: eine erfindungsgemäße Ausführungsform des Mündungsbereiches des Extrusionswerkzeuges gemäß Figur 1 oder Figur 2 und
- Figur 7: eine weitere erfindungsgemäße Ausführungsform des Mündungsbereiches des Extrusionswerkzeuges gemäß Figur 1 oder Figur 2.

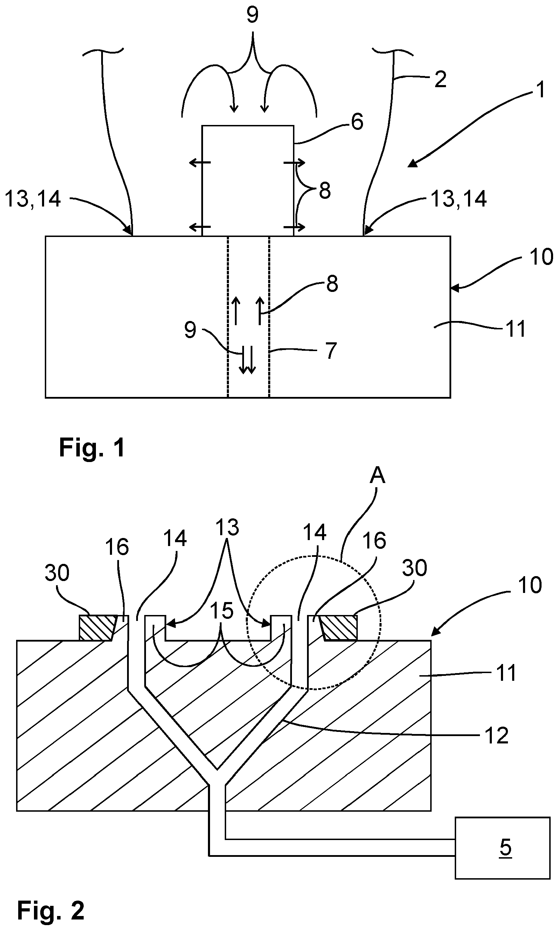

In Figur 1 ist ein Folienblaskopf 1 schematisch dargestellt, der in einer Schlauchextrusionsanlage zur Extrusion oder Co-Extrusion eines Kunststoffschlauches 2 oder einer Kunststofffolie 2 aus einer thermoplastischen Kunststoffschmelze 3 zum Einsatz gebracht werden kann. Hierbei weist der Folienblaskopf 1 ein Extrusionswerkzeug 10 mit einem Werkzeugkörper 11 auf, der einen Schmelzkanal 12 (siehe Figur 2) zur Erzeugung des Kunststoffschlauches 2 umfasst. Dieser Schmelzkanal 12 ist ringförmig ausgestaltet und weist eine Austrittsöffnung 14 gemäß Figur 2 an der Oberseite des Werkzeugkörpers 11 auf, aus der die erwärmte Kunststoffschmelze 3 und/oder der ausgeformte Kunststoffschlauch 2 (auch als Extrudat bezeichenbar) austritt.
Über eine Kühleinheit 6 lässt sich eine Schlauchinnenkühlung realisieren, bei der Kühlluft 8 über die nicht explizit gezeigter Auslasskanäle der Kühleinheit 6 in Richtung Schlauchinnenseite strömt. Im vorliegenden Ausführungsbeispiel ist die Kühleinheit 6 als Etagenkühlung ausgeführt, bei der eine Vielzahl an übereinanderliegenden Auslasskanälen für die Kühlluft 8 vorgesehen sind, um in unterschiedlichen Höhen beabstandet zur Schlauchinnenseite den Schlauch 2 zu kühlen. Des Weiteren ist eine durch den Werkzeugkörper 11 sich erstreckende Luftführung 7 vorgesehen, die die erwärmte Abluft 9, die durch die Schlauchinnenkühlung entsteht, absaugt. Zudem strömt durch die Luftführung 7 die besagte Kühlluft 8 in die Kühleinheit 6 hinein.
In Figur 2 ist des Weiteren schematisch ein Extruder 5 gezeigt. Die Kunststoffschmelze 3 strömt durch eine Leitung in den Werkzeugkörper 11, wobei die Kunststoffschmelze 3 auf eine definierte Temperatur gebracht wird, damit die Kunststoffschmelze 3 bzw. der Kunststoffschlauch 2 aus dem Mündungsbereich 13 des Werkzeugkörpers 11, wie in Figur 1 schematisch gezeigt, austreten kann. Der Mündungsbereich 13 weist eine Austrittsöffnung 14 auf, die ringartig auf der Oberseite des Werkzeugkörpers 11 ausgestaltet ist.
Damit die Oberfläche der austretenden Folie 2 bzw. des Schlauches 2 keinen Schmelzbruch erleidet, weist der Werkzeugkörper 11 am Mündungsbereich 13 eine Heizung 30 auf, die lediglich eine lokale Erwärmung des Mündungsbereiches 13 bewirkt. Gemäß Figur 3 und Figur 5 bewirkt die lokale Erwärmung des Mündungsbereiches 13, dass ein dünner Gleitfilm 4 der Kunststoffschmelze 3 im Schmelzkanal 12 entsteht. Hierdurch lässt sich ein Schmelzbruch an der Oberfläche des Extrudates 2 verhindern. Der Gleitfilm 4 ist erfindungsgemäß niedrigviskos, wobei der Gleitfilm an der Wandung 17 des Schmelzkanals 12 entsteht.
Zudem umfassen die dargestellten Ausführungsbeispiele eine am Werkzeugkörper 11 vorgesehene Wärmetrennung 31, die bewirkt, dass die von der Heizung 30 ausgehende Wärme Q nahezu in den Mündungsbereich 13 gelangt. Hierbei ist die Wärmetrennung 31 derart im Werkzeugkörper 11 integriert, dass ein Wärmeabfluss vom Mündungsbereich 13 in den restlichen Werkzeugkörper 13 gering gehalten wird. Sämtliche Ausführungsbeispiele lassen lediglich zu, dass der Wärmefluss in Richtung Schmelzkanal 12 des Mündungsbereiches 13 erfolgt.
Gemäß sämtlicher Ausführungsbeispiele erstreckt sich der Mündungsbereich 13 vorsprungartig aus dem Werkzeugkörper 11, wobei die Heizung 30, die beispielsweise eine elektrische Heizung 30 ist, direkt am Mündungsbereich 13 angeordnet ist, um wirkungsvoll Wärme in den Mündungsbereich 13 abfließen zu lassen.

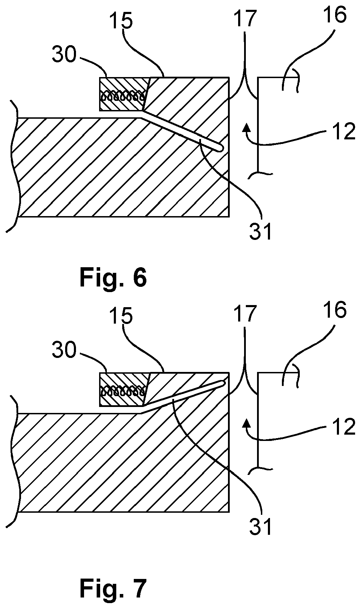

In Figur 3 ist gezeigt, dass die Wärmetrennung 31 als Luftspalt ausgeführt sein kann. Gemäß Figur 5 ist gezeigt, dass die Wärmetrennung 31 aus einem Werkstoffmaterial ausgeführt sein kann, das wärmeisolierende Eigenschaft aufweist. Im vorliegenden Ausführungsbeispiel ist die Wärmetrennung 31 gemäß Figur 5 aus einem keramischen Material ausgebildet.
Gemäß sämtlicher Ausführungsbeispiele erstreckt sich der Mündungsbereich 13 umlaufend am Werkzeugkörper 11, wobei der Mündungsbereich 13 einen inneren Mündungsbereich 15 und einen äußeren Mündungsbereich 16 aufweist. Dieser spezielle Mündungsbereich 13, 15, 16 gemäß der Erfindung kann auch als Düsenlippe bezeichnet werden. Gemäß sämtlicher Ausführungsbeispiele ist es denkbar, dass der innere und der äußere Mündungsbereich 15, 16 jeweils eine eigene Heizung 30 aufweisen, um innerhalb der Kunststoffschmelze 3 den bereits beschriebenen niedrigviskosen Gleitfilm 4 an der Wandung 17 entstehen zu lassen. Der Schmelzbruch an der Extrudatoberfläche kann auch dann verhindert bzw. reduziert werden, wenn eine der beiden Mündungsbereiche 15, 16, d.h. der innere Mündungsbereich 15 oder der äußere Mündungsbereich 16, mit einer Heizung 30 ausgestattet sind.
Gemäß Figur 3 und Figur 5 erstreckt sich die Wärmetrennung 31 senkrecht zur Erstreckung des Schmelzkanals 12. Je nach Anforderungsprofil und technischen Randbedingungen kann es Sinn machen, dass die Wärmetrennung 31 einen schrägen Verlauf zur Erstreckung des Schmelzkanals 12 aufweist, welches in erfindungsgemäßen Ausführungen in Figur 6 und Figur 7 gezeigt ist. Gemäß Figur 6 und Figur 7 entsteht im Wesentlichen oberhalb der Wärmetrennung 31 an der Wandung 17 der bereits beschriebenen Gleitfilm 4, der einen Schmelzbruch an der Oberfläche des Extrudates 2 verhindert. Das Ausführungsbeispiel gemäß Figur 6 und Figur 7 lässt sich auch mit dem Ausführungsbeispiel gemäß Figur 5 kombinieren, dass bedeutet, dass gemäß Figur 6 und Figur 7 anstelle eines Luftspaltes als Wärmetrennung 31 ein wärmeisolierender Werkstoff als Wärmetrennung 31 eingesetzt werden kann, insbesondere aus einem keramischen Material.
Besonders vorteilhaft ist, dass die Wärmetrennung 31 eine Dicke x aufweist, die zwischen 1 mm ≤ x ≤ 5 mm liegt, insbesondere die eine Dicke von ungefähr 3 mm aufweist. Erfindungsgemäß verbleibt ein Abstand y zwischen der Wärmetrennung 10 und dem Schmelzkanal 12, der zwischen 3 mm und 5 mm beträgt.

Gemäß sämtlicher Ausführungsbeispiele lässt sich ein Extrudat bzw. eine Folie 2 oder ein Schlauch 2 herstellen, wobei an der Oberfläche die Irregularitäten, insbesondere Oberflächenschmelzbruch wirkungsvoll verhindert werden kann. Somit können Oberflächendefekte wirkungsvoll vermieden werden. Es lässt sich insbesondere eine extrudierte Kunststofffolie 2 herstellen, die aus einem Polyethylen hergestellt ist, wobei die Folie 2 aus lediglich einer Schicht ausgebildet sein kann oder aus einer Vielzahl an Schichten 21, 22, 23 bestehen kann. In Figur 4 ist eine Kunststofffolie 2 gezeigt, die aus einer Trägerschicht 23 und zwei äußeren Schichten 21, 22 gebildet ist. Ebenfalls ist es denkbar, dass zwischen den beiden äußeren Schichten 21, 22 weitere Zwischenschichten vorgesehen sind. Besonders vorteilhaft ist, dass auf ein Schmelzbruch verhinderndes Prozesshilfsmittel verzichtet werden kann bzw. der Gewichtsanteil stark reduziert werden kann. Dieses gilt insbesondere bei LLDPE-Folien und bei mLLDPE-Folien, die gemäß sämtlicher Ausführungsbeispiele aus Figur 1 bis Figur 7 erzeugbar sind.

### Bezugszeichenliste

- 1: Folienblaskopf
- 2: Extrudat, Schlauch, Folie
- 3: Kunststoffschmelze
- 4: Gleitfilm
- 5: Extruder
- 6: Kühleinheit, Etagenkühlung
- 7: Luftführung
- 8: Kühlluft
- 9: Abluft
- 10: Extrusionswerkzeug
- 11: Werkzeugkörper
- 12: Schmelzkanal
- 13: Mündungsbereich
- 14: Austrittsöffnung
- 15: innerer Mündungsbereich
- 16: äußerer Mündungsbereich
- 17: Wandung

- 21: äußere Schicht
- 22: äußere Schicht
- 23: Trägerschicht

- 30: Heizung
- 31: Wärmetrennung

## Patentansprüche

1. Extrusionswerkzeug (10) für einen Folienblaskopf (1) einer Schlauchextrusionsanlage zur Extrusion eines Schlauches (2) aus einer Kunststoffschmelze (3) mit
einem Werkzeugkörper (11), der einen Schmelzkanal (12) zum Ausformen des Schlauches (2) aufweist, wobei der Werkzeugkörper (11) einen Mündungsbereich (13) mit einer Austrittsöffnung (14) für den Schlauch (2) aufweist,
und der Werkzeugkörper (11) derart ausgeführt ist, dass eine am Werkzeugkörper (11) vorgesehene Heizung (30) lediglich eine lokale Erwärmung des Mündungsbereiches (13) bewirkt,
wobei
der Werkzeugkörper (11) eine Wärmetrennung (31) aufweist, die bewirkt, dass die von der Heizung (30) ausgehende Wärme nahezu in den Mündungsbereich (13) gelangt, **dadurch gekennzeichnet, dass** die Wärmetrennung (31) sich in Richtung des Schmelzkanals (12) erstreckt, wobei die Erstreckung der Wärmetrennung (31) schräg zur Schmelzkanalerstreckung ausgerichtet ist, wodurch der Wirkungsgrad der lokalen Erwärmung des Mündungsbereiches (13) beeinflusst wird, wobei ein Abstand y zwischen der Wärmetrennung (31) und dem Schmelzkanal (12) verbleibt, der 0,5 mm ≤ y ≤ 10 mm beträgt.

2. Extrusionswerkzeug (10) nach einem der vorhergehenden Ansprüche,
**dadurch gekennzeichnet,**
**dass** der Mündungsbereich (13) vorsprungartig aus dem Werkzeugkörper (11) sich erstreckt, wobei die Heizung (30) am oder im Mündungsbereich (13) angeordnet ist.

3. Extrusionswerkzeug (10) nach einem der vorhergehenden Ansprüche,
**dadurch gekennzeichnet,**
**dass** die Wärmetrennung (31) am und/oder im Mündungsbereich (13) angeordnet ist, die als Isolator ausgeführt ist,
wobei insbesondere die Wärmetrennung (31) als Luftspalt ausgeführt ist oder dass die Wärmetrennung (31) aus einem Werkstoffmaterial ausgeführt ist, das wärmeisolierende Eigenschaften aufweist, insbesondere dass die Wärmetrennung (31) aus einem keramischen Material ausgebildet ist.

4. Extrusionswerkzeug (10) nach einem der vorhergehenden Ansprüche,
**dadurch gekennzeichnet,**
**dass** die Wärmetrennung (31) eine Dicke x aufweist, die 0,5 mm ≤ x ≤ 10 mm beträgt, insbesondere 1 mm ≤ x ≤ 5 mm.

5. Extrusionswerkzeug (10) nach einem der vorhergehenden Ansprüche,
**dadurch gekennzeichnet,**
**dass** der Werkzeugkörper (11) mit Heizung (30) und der Wärmetrennung (31) derart ausgeführt sind, dass die Wandtemperatur des Schmelzkanals (12) im Mündungsbereich (13) größer ist als die Schmelztemperatur der Kunststoffschmelze (3) und/oder dass der Mündungsbereich (13) sich umlaufend am Werkzeugkörper (11) erstreckt, wobei der Mündungsbereich (13) einen inneren Mündungsbereich (15) und einen äußeren Mündungsbereich (16) aufweist, wobei der innere Mündungsbereich (15) und/oder der äußere Mündungsbereich (16) die Heizung (30) aufweisen.

6. Extrusionswerkzeug (10) nach einem der vorhergehenden Ansprüche,
**dadurch gekennzeichnet,**
**dass** der Werkzeugkörper (11) derart ausgestaltet ist, dass der Mündungsbereich (13) mit der Heizung (30) am Werkzeugkörper (11) nachrüstbar ist.

7. Verfahren zur Erzeugung eines Kunststoffschlauches (2), das aus einem Extrusionswerkzeug (10) nach einem der Ansprüche 1 bis 6 eines Folienblaskopfes (1) extrudiert wird, wobei
das Extrusionswerkzeug (10) einen Werkzeugkörper (11) mit einem Schmelzkanal (12) aufweist, aus dem aus einer Kunststoffschmelze (3) der Kunststoffschlauch (2) ausgeformt wird,
der Werkzeugkörper (11) einen Mündungsbereich (13) mit einer Austrittsöffnung (14) für den Kunststoffschlauch (2) aufweist, und
eine Heizung (30) am Werkzeugkörper (11) vorgesehen ist, die lediglich eine lokale Erwärmung des Mündungsbereiches (13) bewirkt, wodurch ein dünner Gleitfilm (4) der Kunststoffschmelze (3) im Schmelzkanal (12) entsteht, wobei sich der Gleitfilm (4) entlang des
Werkzeugkörpers (11) des Mündungsbereiches (13) erstreckt, so dass ein Schmelzbruch am Kunststoffschlauch (2) verhindert wird,
wobei der Werkzeugkörper (11) eine Wärmetrennung aufweist, die sich schräg in Richtung des Schmelzkanals (12) erstreckt, und die bewirkt, dass die von der Heizung (30) ausgehende Wärme nahezu in den Mündungsbereich (13) gelangt.

8. Verfahren nach Anspruch 7,
**dadurch gekennzeichnet,**
**dass** die Heizung (30) Wärmeenergie in den Mündungsbereich (13) einbringt, so dass ein niedrigviskoser Gleitfilm (4) entsteht, und/oder dass eine Wärmetrennung (31) derart im Werkzeugkörper (11) integriert ist, dass ein Wärmeabfluss vom Mündungsbereich (13) in den restlichen Werkzeugkörper (11) gering gehalten wird.

9. Verfahren nach Anspruch 7 oder 8,
**dadurch gekennzeichnet,**
**dass** die Viskosität des Gleitfilms (4) wesentlich geringer ist als die Viskosität der übrigen Kunststoffschmelze (3) innerhalb des Mündungsbereiches (13).

## Claims

1. An extrusion tool (10) for a film blow head (1) of a tube extrusion system for extruding a tube (2) from a plastics melt (3) having a tool body (11) that has a melt channel (12) for shaping the tube (2), wherein the tool body (11) has mouth region (13) with an outlet opening (14) for the tube (2),
and the tool body (11) is designed in such a manner that a heater (30) provided on the tool body (11) only produces a local heating of the mouth region (13),
wherein
the tool body (11) has a heat separation (31), which brings it about that the heat originating from the heater (30) almost reaches the mouth region (13), **characterized in that** the heat separation (31) extends in the direction of the melt channel (12), wherein the extension of the heat separation (31) is aligned obliquely to the melt channel extension, whereby the efficiency of the local heating of the mouth region (13) is influenced, wherein a distance y between the heat separation (31) and the melt channel (12) remains, which is 0.5 mm ≤ y ≤ 10 mm.

2. An extrusion tool (10) according to any one of the preceding claims,
**characterized in**
**that** the mouth region (13) extends from the tool body (11) projection-like, wherein the heater (30) is arranged on or in the mouth region (13).

3. An extrusion tool (10) according to any one of the preceding claims,
**characterized in**
**that** the heat separation (31) is arranged on and/or in the mouth region (13), which is designed as an insulator,
wherein in particular the heat separation (31) is designed as an air gap or that the heat separation (31) is formed from material that has heat-insulating properties, in particular that the heat separation (31) is formed from a ceramic material.

4. An extrusion tool (10) according to any one of the preceding claims, **characterized in**
**that** the heat separation (31) has a thickness x, which is 0.5 mm ≤ x ≤ 10 mm, in particular 1 mm ≤ x ≤ 5 mm.

5. An extrusion tool (10) according to any one of the preceding claims,
**characterized in**
**that** the tool body (11) with the heater (30) and the heat separation (31) are designed in such a manner that the wall temperature of the melt channel (12) in the mouth region (13) is greater than the melt temperature of the plastic melt (3) and/or that the mouth region (13) extends circumferentially on the tool body (11), wherein the mouth region (13) has an inner mouth region (15) and an outer mouth region (16), wherein the inner mouth region (15) and/or the outer mouth region (16) has a heater (30).

6. An extrusion tool (10) according to any one of the preceding claims,
**characterized in**
**that** the tool body (11) is designed in such a manner that the mouth region (13) can be retrofitted with the heater (30) on the tool body (11).

7. A method for generating a plastic tube (2), that is extruded from an extrusion tool (10) according to any one of Claims 1 to 6 of a film blow head (1) wherein
the extrusion tool (10) has a tool body (11) with a melt channel (12), from which from a plastic melt (3) the plastic tube (2) is shaped,
the tool body (11) has a mouth region (13) with an outlet opening (14) for the plastic tube (2), and
a heater (30) is provided on the tool body (11), which only produces a local heating of the mouth region (13), whereby a thin sliding film (4) of the plastic melt (3) arises in the melt channel (12), wherein the sliding film (4) extends along the tool body (11) of the mouth region (13), so that a melt fracture is prevented on the plastic tube (2),
wherein the tool body (11) has a heat separation, which extends obliquely in the direction of the melt channel (12), and which brings it about that the heat originating from the heater (30) almost reaches the mouth region (13).

8. A method according to Claim 7,
**characterized in**
**that** the heater (30) introduces heat energy to the mouth region (13), so that a low-viscosity sliding film (4) arises,
and/or that a
heat separation (31) is integrated in the tool body (11) in such a manner that a heat discharge from the mouth region (13) into the remaining tool body (11) is kept low.

9. A method according to Claim 7 or 8,
**characterized in**
**that** the viscosity of the sliding film (4) is substantially less than the viscosity of the remaining plastic melt (3) within the mouth region (13).

## Revendications

1. Outil d'extrusion (10) pour une tête de soufflage de film (1) d'une installation d'extrusion de tuyaux pour l'extrusion d'un tuyau (2) à partir d'une masse fondue de matière plastique (3) avec un corps d'outil (11) qui comporte un canal de fusion (12) pour le formage du tuyau (2), le corps d'outil (11) comportant une zone d'embouchure (13) avec une ouverture de sortie (14) pour le tuyau (2), et le corps d'outil (11) étant réalisé de telle sorte qu'un chauffage (30) prévu sur le corps d'outil (11) provoque uniquement un échauffement local de la zone d'embouchure (13),
le corps d'outil (11) comportant une séparation thermique (31) qui fait que la chaleur sortant du chauffage (30) arrive à peu près dans la zone d'embouchure (13),
**caractérisé en ce que** la séparation thermique (31) s'étend dans la direction du canal de fusion (12), l'étendue de la séparation thermique (31) étant orientée obliquement par rapport à l'étendue du canal de fusion, ce qui fait que le rendement de l'échauffement local de la zone d'embouchure (13) est influencé, une distance y entre la séparation thermique (31) et le canal de fusion (12) étant conservée et étant égale à 0,5 mm ≤ y ≤ 10 mm.

2. Outil d'extrusion (10) selon l'une des revendications précédentes,
**caractérisé en ce que**
la zone d'embouchure (13) s'étend en faisant saillie par rapport au corps d'outil (11), le chauffage (30) étant disposé sur ou dans la zone d'embouchure (13).

3. Outil d'extrusion (10) selon l'une des revendications précédentes,
**caractérisé en ce que**
la séparation thermique (31) est disposée sur et/ou dans la zone d'embouchure (13) et est réalisée en tant qu'isolateur,
la séparation thermique (31) étant en particulier réalisée en tant qu'interstice d'air, ou **en ce que** la séparation thermique (31) est réalisée dans un matériau qui présente des caractéristiques d'isolation thermique, en particulier **en ce que** la séparation thermique (31) est réalisée dans un matériau céramique.

4. Outil d'extrusion (10) selon l'une des revendications précédentes,
**caractérisé en ce que**
la séparation thermique (31) présente une épaisseur x qui est égale à 0,5 mm ≤ x ≤ 10 mm, en particulier à 1 mm ≤ x ≤ 5 mm.

5. Outil d'extrusion (10) selon l'une des revendications précédentes,
**caractérisé en ce que**
le corps d'outil (11) avec chauffage (30) et avec la séparation thermique (31) est réalisé de telle sorte que la température de paroi du canal de fusion (12) dans la zone d'embouchure (13) est plus élevée que la température de fusion de la masse fondue de matière plastique (3) et/ou **en ce que** la zone d'embouchure (13) s'étend de façon périphérique sur le corps d'outil (11), la zone d'embouchure (13) comportant une zone d'embouchure (15) intérieure et une zone d'embouchure (16) extérieure, la zone d'embouchure (15) intérieure et/ou la zone d'embouchure (16) extérieure comportant le chauffage (30).

6. Outil d'extrusion (10) selon l'une des revendications précédentes,
**caractérisé en ce que**
le corps d'outil (11) est constitué de telle sorte que la zone d'embouchure (13) avec le chauffage (30) peut être installée a posteriori sur le corps d'outil (11).

7. Procédé de production d'un tuyau (2) en matière plastique qui est extrudé à partir d'un outil d'extrusion (10) selon l'une des revendications 1 à 6 d'une tête de soufflage de film (1), l'outil d'extrusion (10) comportant un corps d'outil (11) avec un canal de fusion (12) à partir duquel le tuyau (2) en matière plastique est formé à partir d'une masse fondue de matière plastique (3),
le corps d'outil (11) comportant une zone d'embouchure (13) avec une ouverture de sortie (14) pour le tuyau (2) en matière plastique, et
un chauffage (30) étant prévu sur le corps d'outil (11) et provoquant uniquement un échauffement local de la zone d'embouchure (13), ce qui crée un film lubrifiant (4) mince de la masse fondue de matière plastique (3) dans le canal de fusion (12), le film lubrifiant (4) s'étendant le long du corps d'outil (11) de la zone d'embouchure (13) de telle sorte qu'une rupture de la masse fondue sur le tuyau (2) en matière plastique est évitée,
le corps d'outil (11) comportant une séparation thermique qui s'étend obliquement dans la direction du canal de fusion (12) et qui fait que la chaleur sortant du chauffage (30) arrive à peu près dans la zone d'embouchure (13).

8. Procédé selon la revendication 7,
**caractérisé en ce que**
le chauffage (30) introduit de l'énergie thermique dans la zone d'embouchure (13) de telle sorte qu'un film lubrifiant (4) de faible viscosité est créé et/ou **en ce qu'**une séparation thermique (31) est intégrée dans le corps d'outil (11) de telle sorte qu'une dispersion de chaleur à partir de la zone d'embouchure (13) en direction du corps d'outil (11) restant est maintenue à un faible niveau.

9. Procédé selon la revendication 7 ou 8,
**caractérisé en ce que**
la viscosité du film lubrifiant (4) est beaucoup plus faible que la viscosité de la masse fondue de matière plastique (3) restante à l'intérieur de la zone d'embouchure (13) .
